# EUROPÄISCHE PATENTSCHRIFT

(11) **EP 1 282 373 B1**
(45) Veröffentlichungstag und Bekanntmachung des Hinweises auf die Patenterteilung: **02.02.2005**
(21) Anmeldenummer: 02742864.8
(22) Anmeldetag: 23.03.2002
(51) Int. Cl.: A46B 9/04, A46D 3/00

(54) **ZAHNBÜRSTENKOPF**
HEAD OF A TOOTHBRUSH
TETE DE BROSSE A DENTS

(30) Priorität: 12.05.2001 DE 10123258
(43) Veröffentlichungstag der Anmeldung: 12.02.2003
(73) Patentinhaber: Braun GmbH, 61476 Kronberg (DE)
(72) Erfinder: DRIESEN, Georges, 61276 Weilrod (DE); FRITSCH, Thomas, 65817 Eppstein (DE)
(86) Internationale Anmeldenummer: PCT/EP2002/003287
(87) Internationale Veröffentlichungsnummer: WO 2002/091876

(56) Entgegenhaltungen:
- DE-A- 19 545 030
- US-A- 6 009 589
- US-A1- 2001 023 516

## Beschreibung

Die vorliegende Erfindung betrifft einen Bürstenkopf, insbesondere einen Zahnbürstenkopf, mit einem Borstenträger und daran befestigten Borsten, die in Form von Borstenbüscheln in Ausnehmungen im Borstenträger sitzen und mit ihren borstenträgerseitigen Enden am Borstenträger ankerfrei befestigt, insbesondere auf einer Rückseite des Borstenträgers verschweißt und/oder verklebt sind.

Im Gegensatz zum sogennanten Ankerstopfverfahren, bei dem die Borstenbüschel in U-Form gelegt und mit Hilfe kleiner Ankerplättchen aus Metall, die zwischen die Schenkel der U-förmigen Borstenbüschel gelegt werden, in eine im Borstenträger vorgesehene Sacklochbohrung gestopft und durch Einschießen des Ankerplättchens in gegenüberliegende Seitenwände der Sacklochbohrung befestigt werden, werden bei der ankerfreien Befestigung von Borstenbüscheln die Borsten nicht in U-Form gelegt. Beim sogenannten "anchor free tufting" sitzen die Borsten mit ihren einen Enden in den Ausnehmungen im Borstenträger, während die gegenüberliegenden Enden frei auskragen und die Arbeitsenden der Borsten bilden. Die in den Ausnehmungen sitzenden Enden werden beispielsweise durch Verschweißen bzw. Verkleben am Borstenträger befestigt.

Aus der DE 195 45 030 A1 ist bereits eine Bürste mit gestopften und mittels Ankerplättchen befestigten Borstenbündeln bekannt. Zum Formen zumindest einesTeiles der Borstenbündel-Löcher in den Borstenträger sind Lochstempel vorgesehen, mit denen Löcher erzeugt werden können, die größer sind als der Querschnitt eines einzelnen Borstenbündels. Diese Lochstempel weisen zum einen Ende hin randoffene Einschnitte zur Erzeugung eines Zwischensteges oder einer Trennwand innerhalb des Gesamtlochquerschnittes auf. Damit wird das Gesamtloch in Teillochabschnitte mit jeweils einem etwa dem Borstenbündel-Querschnitt entsprechenden Querschnitt geschaffen. Es lassen sich damit Bürsten herstellen, die aus mehreren Einzel-Borstenbündeln zusammengesetzte Borstenteilfelder aufweisen. Die Zwischenstege oder Trennwände bestehen aus dem gleichen Material wie der Borstenträger selbst, in der Regel Kunststoff. Diese Kunststofftrennwände müssen jedoch zur Befestigung der Borstenbüschel mittels Ankerplättchen entsprechend dick ausgebildet sein, so daß sie sich bei dem Bestopfen nicht verbiegen. Infolgessen bleibt zwischen den einzelnen, in die Teillochabschnitte gestopften Borstenbüscheln ein relativ weiter Spalt vorhanden, so daß zum einen die in dem Gesamtlochquerschnitt befindlichen Borstenbüschel ein homogenes Borstenfeld nicht bilden und zum anderen die Stabilität der einzelnen Borsten reduziert wird, da diese aufgrund des Vorhandenseins der relativ dicken Kunststofftrennwände und der damit einhergehenden Spaltbildung sich nicht mehr ausreichend gegenseitig abstützen können.

Eine Zahnbürste mit im "anchor free tufting" ― "Verfahren befestigten Borstenbüscheln zeigen z. B. die WO 99/55194 oder EP 0972464 A1. Solche Bürstenköpfe mit ankerfrei befestigten Borstenbüscheln sind in mehrerer Hinsicht verbesserungsfähig:

Ein Problem betrifft die Lebensdauer derartiger Bürsten. Aufgrund einer relativ starken Borstenbewegung, insbesondere bei Borstenbüscheln mit nicht kreisförmiger Außenkontur, kommt es zu vorzeitigem Verschleiß. Die freie und damit biegbare Länge der Borsten ist aufgrund der speziellen Borstenbefestigung am einen Ende der Borsten gegenüber im Ankerstopfverfahren befestigten Borstenbüscheln größer, so daß ansonsten gleiche Borsten sich dann leichter biegen, wenn sie nach dem "anchor free tufting"-Verfahren festgelegt sind.

Ferner beeinflußt die Beweglichkeit die Wirksamkeit der Zahnreinigung negativ und verringert die subjektiv wahrgenommene Steifigkeit des Bürstenkopfes. Aufgrund der empfundenen Weichheit des Bürstenkopfes werden in der Regel höhere Putzkräfte angewendet. Diese können bei elektrischen Zahnbürsten den Oszillationswinkel des Bürstenkopfs aufgrund von Spiel im Getriebesystem der Zahnbürste vermindern und damit die Putzleistung beeinträchtigen.

Auch in optischer Hinsicht bestehen Verbesserungsmöglichkeiten. Bei dem "anchor free tufting"-Verfahren kann es zu einem Übereinanderschieben der Borsten innerhalb eines Borstenbüschels kommen, so dass bei farbig abgegrenzten Borstenbüschelbereichen keine klare Farbgrenze wahrnehmbar ist.

Der vorliegenden Erfindung liegt daher die Aufgabe zugrunde, einen verbesserten Bürstenkopf der eingangs genannten Art zu schaffen, der Nachteile des Standes der Technik vermeidet und diesen in vorteilhafter Weise weiterbildet. Insbesondere soll die ankerfreie Befestigung der Borstenbüschel verbessert werden, so dass die genannten Nachteile beseitigt werden.

Diese Aufgabe wird erfindungsgemäß durch einen Bürstenkopf gemäß Patentanspruch 1 gelöst. Bevorzugte Ausführungen der Erfindung sind Gegenstand der untergeordneten Ansprüche.

Erfindungsgemäß besitzt der Bürstenkopf zumindest eine Ausnehmung in dem Borstenträger, die mittels zumindest einer Querwand in mehrere Segmente unterteilt ist, wobei die zumindest eine Querwand derart ausgebildet ist, dass die in den Segmenten sitzenden Borsten ein gemeinsames Borstenbüschel mit glatter und geschlossener Außenkontur entsprechend der Kontur der Ausnehmung bilden. Es sitzt in der Ausnehmung also ein Borstenbüschel, das bzw. dessen Befestigung in der Ausnehmung in mehrere Segmente unterteilt ist, nach außen hin jedoch ein einheitliches Borstenfeld bildet. Die Querwand bildet eine Stützwand im Inneren der Ausnehmung, an der sich die Borsten eines Borstenbüschels zusätzlich zu der Umfangswandung der Ausnehmung abstützen können, insbesondere gegen Umbiegen. Speziell werden hierdurch auch nicht am Außenumfang der Ausnehmung liegende Borsten abgestützt, so dass das jeweilige Borstenbüschel insgesamt steifer wird. Die Quer- bzw. Stützwand verringert die effektiv zur Verfügung stehende Biegelänge der Borsten, da diese nicht mehr bis zu ihrem in der Ausnehmung sitzenden Ende, einschließlich des in der Ausnehmung befindlichen Teils, frei biegsam sind, sondern oberhalb ihrer in den Ausnehmungen sitzenden Enden nochmals gegen Biegen abgestützt sind. Hierdurch erhält das jeweilige Borstenbüschel eine größere Steifigkeit (Borstensteifigkeit einer Borste ist etwa proportional zu Durchmesser der Borste hoch vier dividiert durch freie Länge der Borste hoch drei), die Beweglichkeit der Borsten ist reduziert, so dass der Benutzer der Bürste eine höhere Steifigkeit des Bürstenkopfes wahrnimmt und dementsprechend mit verringerter Kraft putzen wird. Der Verschleiß der Borsten wird verringert und die Effizienz des Putzvorgangs wird verbessert, da die zuvor beschriebenen Nachteile nicht mehr auftreten. Darüber hinaus kann durch die Unterteilung der Ausnehmung in mehrere Segmente z. B. eine klare Abgrenzung zwischen verschieden farbigen Filamenten eines Borstenbüschels geschaffen werden.

Ein weiterer wichtiger positiver Effekt der Verwendung solcher Stützwände bei Borstenbüscheln, die im "anchor free tufting"- Verfahren am Borstenträger befestigt werden, ist, dass die Borstenbüschel vergleichbare Eigenschaften, insbesondere eine vergleichbare Steifigkeit wie im Ankerstopfverfahren befestigte Borstenbüschel erhalten, so dass auch die klinischen Versuchsergebnisse durchaus vergleichbar sind. Hierdurch können wertvolle Erkenntnisse gewonnen und übertragen sowie die Zeit und Kosten der Entwicklung der Bürsten sowie für separate klinische Versuchsreihen eingespart werden.

In Weiterbildung der Erfindung ist die Unterteilung durch zumindest eine Querwand bei Ausnehmungen des Borstenträgers vorgesehen, die eine langgestreckte Außenkontur nach Art eines Langlochs besitzen und dementsprechend jeweils ein Borstenbüschel mit ebenfalls langgestreckter Außenkontur aufnehmen. Die zumindest eine Querwand erstreckt sich vorzugsweise etwas quer zur Längsachse der jeweiligen Ausnehmung. Hierbei ist zu beachten, dass die Längsachse der Ausnehmung keine Gerade zu sein braucht, sie kann auch gekrümmt sein, wie dies insbesondere bei runden Zahnbürstenköpfen elektrischer Zahnbürsten der Fall ist. Es versteht sich, daß die Ausnehmungen, in denen die Querwände angeordnet sind, auch andere Dimensionierungen haben können. Beispielsweise können diese Ausnehmungen auch rechteckig, kreisförmig, im wesentlichen dreieckförmig sein, wobei dann die Querwände beispielsweise sternförmig, mäanderartig oder dergleichen in der Ausnehmung angeordnet sind, um die Ausnehmung in Teilquerschnitte zu unterteilen. Bei bogenförmig gekrümmten Langlöchern kann beispielsweise eine sich entlang einer bogenförmigen Mittelachse des Langloches erstreckende Querwand mit ein oder mehreren quer zu dieser Querwand angeordneten weiteren Querwänden vorgesehen sein. Die Ausbildung und Anordnung der Querwände in der Ausnehmung richtet sich nach der jeweiligen Geometrie und kann vielfältiger Natur sein. Gerade bei Ausnehmungen mit von einer Kreisform verschiedener Kontur bewirken eingezogene Stützwände beträchtliche Vorteile, da hier ansonsten mangels Abstützung der Borsten in Richtung der Längsachse der Ausnehmung eine starke Bewegung und ein leichtes Biegen der Borsten auftreten würde.

Vorzugsweise beträgt die Dicke der zumindest einen Querwand nur den Bruchteil eines Millimeters, um in dem Borstenbüschel keinen Spalt zu erzeugen. Für übliche Borstenbüschel mit einem Durchmesser zwischen 1,5 mm und 1,7 mm kann nach einer vorteilhaften Ausführung der Erfindung die Dicke der Querwand im Bereich von 0,2 mm bis 0,3 mm liegen. Falls dickere Borstenbüschel Verwendung finden, kann die Wanddicke entsprechend verstärkt werden.

In Weiterbildung der Erfindung ist die zumindest eine Querwand in die Ausnehmung versenkt. Eine Querwandoberkante ist gegenüber einer Oberseite des Borstenträgers, in der die Ausnehmungen ausgebildet sind, tiefer gesetzt.

Der Betrag der Absenkung gegenüber der Borstenträgeroberseite kann verschieden gewählt werden. Nach einer bevorzugten Ausführung der Erfindung beträgt eine Höhendifferenz zwischen der Oberkante der zumindest einen Querwand und der Oberseite des Borstenträgers im Bereich von 0,1 mm bis 0,7 mm, vorzugsweise etwa 0,25 mm bis 0,5 mm. Hierdurch bleiben die Stützwände unsichtbar und die Borstenbüschel behalten ein volles, einheitliches Erscheinungsbild.

Um eine Spaltbildung zwischen den Segmenten eines Borstenbüschels zu verhindern, kann weiterhin vorgesehen sein, dass die zumindest eine Querwand sich zu ihrer Oberseite hin in ihrer Dicke verjüngt, insbesondere konisch ausgebildet ist. Gegenüberliegende Seiten der Querwand sind nach oben hin V-förmig geneigt, so dass die Borsten zusammen laufen und sich ein geschlossenes, dichtes Borstenbüschel ohne Spalten ergibt. Eine solche Gestaltung der Stütz- bzw. Querwand vereinfacht darüberhinaus das Einführen der Borsten in die entsprechende Ausnehmung.

Es kann auch vorgesehen sein, dass die Oberkante der Querwand abgerundet ist, um einerseits einen harmonischen Verlauf der Borsten zu erreichen und andererseits Verschleiß der Borsten an der Querwandoberkante zu vermeiden. Halbelliptische Querschnitte und ähnlich abgerundete Formen der Stützwand sind möglich.

In Weiterbildung der Erfindung ist die zumindest eine Querwand integral einstückig mit dem Borstenträger ausgebildet. Sie kann insbesondere zusammen mit dem Borstenträger aus Kunststoff spritzgegossen sein.

Zur Abstützung der Borsten könnte auch ein vom Borstenträger separat ausgebildetes Ankerplättchen aus Metall nachträglich in die Ausnehmung eingesetzt, insbesondere eingeschossen sein, das jedoch im Gegensatz zu seinem eigentlichen Zweck im Ankerstopfverfahren nicht der Befestigung der Borsten, sondern nur ihrer Abstützung gegen Biegen dient. Es könnte auch ein drahtförmiger Quersteg oder ähnliches vorgesehen sein. Die zuvor genannte Ausführung, wonach die Querwand integral einstückig mit dem Borstenträger spritzgegossen ist, erlaubt jedoch die Einsparung eines weiteren, separaten Montage- bzw. Herstellungsschrittes.

Die Ausrichtung der zumindest einen Querwand in der Borstenträgerausnehmung kann an die spezielle Gestaltung des Borstenbüschels bzw. der Ausnehmung angepasst werden. Eine vorteilhafte Ausführung besteht darin, dass die zumindest eine Querwand zur Borstenträgeroberseite senkrecht angeordnet ist. Hierdurch erfahren die Borsten eine im wesentlichen senkrecht abstehende Ausrichtung bzw. Abstützung.

Nach einer weiteren bevorzugten Ausführung der Erfindung kann die zumindest eine Querwand geneigt angeordnet sein. Sie kann insbesondere in einem spitzen Winkel zur Borstenträgernormalen, die zur Borstenträgeroberseite senkrecht steht, geneigt sein.

Insbesondere bei schräg geneigten Borstenbüscheln kann die geneigte Anordnung der Querwand vorgesehen sein. Vorzugsweise erstreckt sich die Querwand parallel zur Borstenbüschelachse. Auch die Außenwandungen der entsprechenden Ausnehmung, die parallel zu der geneigten Querwand verlaufen, können entsprechend geneigt ausgebildet sein.

Nach einer weiteren Variante kann die zumindest eine Querwand auch entgegen der Borstenbüschelachse geneigt sein.

Die Anordnung der Querwand bzw. der Querwände bezüglich der Grundfläche der jeweiligen Ausnehmung kann verschieden getroffen werden. In vorteilhafter Weise sind die Querwände derart angeordnet, dass die jeweilige Ausnehmung in etwa gleich große Segmente unterteilt wird. Hierdurch erhalten die verschiedenen Borstenbüschelsegmente etwa die selbe Steifigkeit, so dass insgesamt homogene Eigenschaften des Borstenbüschels erzielt werden können.

Die Ausnehmungen in dem Borstenträger sind vorzugsweise Durchgangsausnehmungen in dem im wesentlichen scheiben- oder plattenförmig ausgebildeten Borstenträger, der für eine elektrische Zahnbürste die Form einer ebenen Scheibe haben kann. Die Borsten stehen mit ihren einen Enden auf der Rückseite des Borstenträgers aus den Ausnehmungen heraus. Sie können hier z. B. mittels eines Prägestempels miteinander verschweißt oder auch verklebt werden, wie dies an sich bekannt ist.

In verschiedenen Segmenten einer Ausnehmung im Borstenträger können verschiedene Borsten sitzen. Das gemeinsame Borstenbüschel wird dementsprechend aus verschiedenen Borsten aufgebaut. Vorzugsweise sitzen innerhalb eines Segments Borsten des selben Typs.

In Weiterbildung der Erfindung sind die Segmente der unterteilten Ausnehmung von der Kreisform abweichend konturiert. Es können insbesondere Segmente mit z. B. etwa mehreckiger Kontur vorgesehen sein, die zumindest zwei parallele Seiten aufweisen. Die Querwand kann gerade ausgebildet sein, ebenso wie die Seitenwände einer länglichen Ausnehmung im Borstenträger.

Sämtliche Erkenntnisse der vorliegenden Anmeldung sind gleichermaßen für Handzahnbürsten oder motorisch angetriebene Zahnbürsten anwendbar bzw. einsetzbar.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung.

Es zeigen:
- Figur 1: eine Draufsicht auf die Oberseite eines Borstenträgers eines Zahnbürstenkopfes für eine elektrische Zahnbürste,
- Figur 2: eine Draufsicht auf die Unterseite des Borstenträgers aus Figur 1,
- Figur 3: eine Schnittansicht des Borstenträgers aus Figur 1 entlang der darin gezeigten Schnittlinie A - A,
- Figur 4: eine Schnittansicht des Borstenträgers aus Figur 1 entlang der Schnittlinie B-B mit eingesetzten Borstenbüscheln,
- Figur 5: eine Schnittansicht des Borstenträgers ohne Borsten entlang der Linie B - B in Figur 1,
- Figur 6: eine ausschnittsweise Schnittansicht durch eine Ausnehmung in dem Borstenträger entlang der Linie E - E, die in den Ausschnitt eingezeichnet ist, der in Figur 1 mit Z bezeichnet ist,
- Figur 7: eine Ausschnittsweise Schnittansicht durch eine Ausnehmung in dem Borstenträger ähnlich Figur 6 gemäß einer weiteren bevorzugten Ausführung der Erfindung und
- Figur 8: eine Schnittansicht durch einen Borstenträger ähnlich Figur 5, der unterschiedliche Ausführungen der Erfindung zeigt, in denen die in den Ausnehmungen angeordneten Querwände unterschiedlich geneigt angeordnet sind.

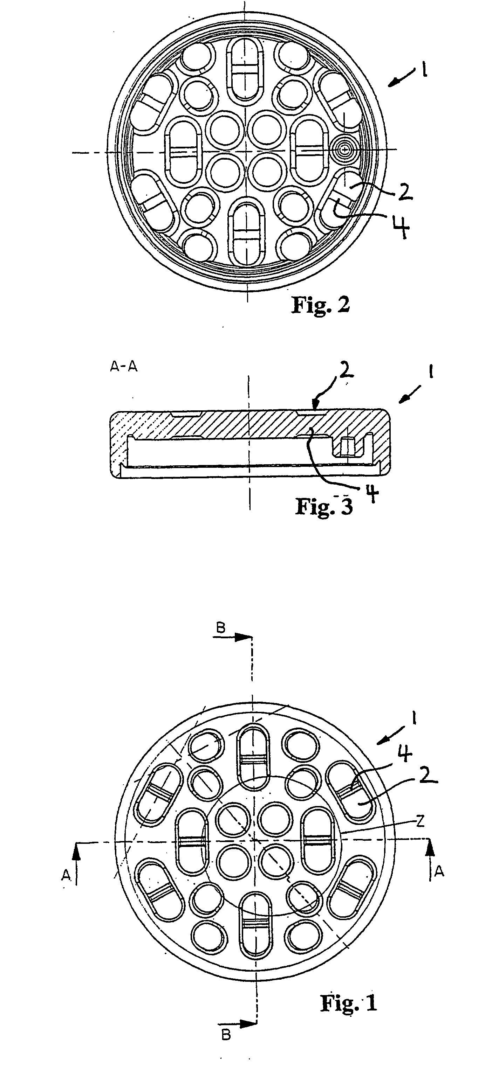

Die Figuren 1 bis 3 zeigen den Borstenträger 1, der im wesentlichen als ebene Scheibe mit seitlich nach unten überstehenden Rändern ausgebildet ist und auf das Unterteil eines Zahnbürstenkopfs einer elektrischen Zahnbürste mit den überstehenden Rändern in an sich bekannter Weise aufschnappbar oder aufschweißbar ist. Der Borstenträger 1 besitzt eine Vielzahl von Durchgangsausnehmungen 2, von denen ein Teil im wesentlichen kreisförmig ausgebildet ist. Die übrigen Durchgangsausnehmungen sind als Langloch ausgebildet (vgl. Figur 1 und Figur 2). Der gesamte Borstenträger 1 ist als Kunststoffspritzgußteil gefertigt. Die Durchgangsausnehmungen 2 können gleich beim Spritzgußvorgang mit ausgebildet werden.

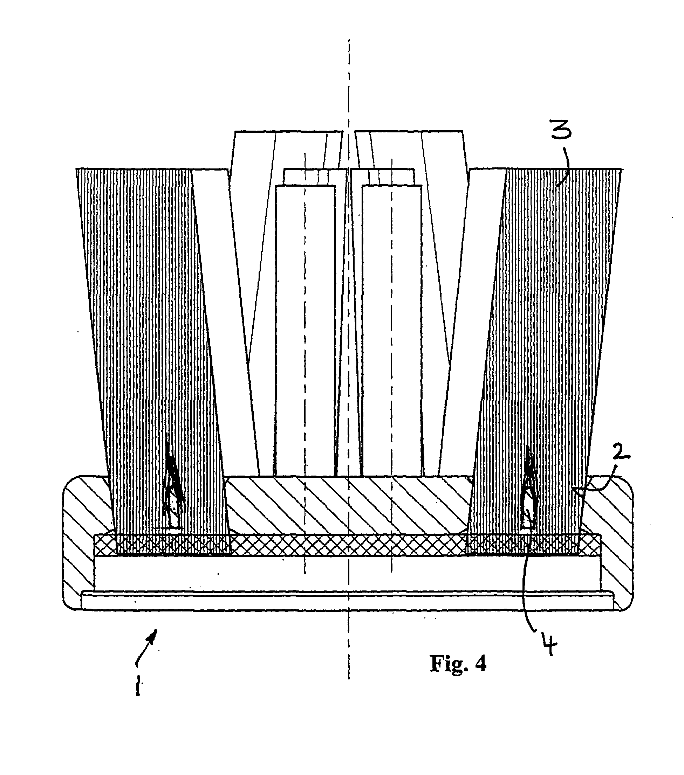

Wie Figur 4 zeigt, werden in die Ausnehmungen 2 in dem Borstenträger 1 eine Vielzahl von Borsten angeordnet, die in den Ausnehmungen 2 in Form von Bürstenbüscheln 3 sitzen. Jede Ausnehmung 2 nimmt jeweils ein Borstenbüschel 3 auf, die, wie Figur 4 zeigt, unterschiedlich geneigt angeordnet sein können. Zudem besitzen die Borstenbüschel 3 unterschiedliche Außenkonturen. Die in den langlochförmigen Ausnehmungen 2 sitzenden Borstenbüschel 3 besitzen ebenfalls eine langgestreckte und geschlossene Außenkontur, die im wesentlichen der langlochförmigen Kontur der zugehörigen Ausnehmung 2 entsprechen kann. Die in den kreisförmigen Ausnehmungen 2 sitzenden Borstenbüschel 3 bilden herkömmliche, ebenfalls kreisrund im Querschnitt ausgebildete Borstenbüschel.

Wie Figur 4 zeigt, sind die Borstenbüschel 3 ankerfrei in den Ausnehmungen 2 befestigt. Sie treten mit einem ersten Ende durch die Durchgangsausnehmungen 2 hindurch und ragen auf der Rückseite des Borstenträgers 1 hervor. Die an der Rückseite des Borstenträgers 1 herausragenden Enden werden miteinander verbunden. Dies kann z. B. durch einen heißen Prägestempels erfolgen, der die ausnehmungsseitigen Enden der Borsten miteinander verschweißt. Die auf der Rückseite herausragenden Enden der Borsten können auch mittels Klebstoff fixiert werden. Sie können auch in einem Formkörper aus einem anderen, insbesondere thermoplastischem Material eingegossen werden, so dass die ausnehmungsseitigen Enden der Borsten festgelegt sind. Wie Figur 4 zeigt, können die Borsten auch aus verschiedenen Borstenbüscheln miteinander verschweißt werden, so dass sich auf der Rückseite des Borstenträgers 1 eine insgesamt plattenförmige Fixierung der Borsten bildet.

Wie Figur 1 zeigt, sind die langlochförmig ausgebildeten Ausnehmungen 2 durch jeweils eine Querwand 4 in jeweils zwei Segmente unterteilt. Die Querwand 4 ist integral an den Borstenkörper 1 angeformt, vorzugsweise beim Spritzgießen bereits mit angegossen. Die Querwand 4 erstreckt sich jeweils quer zur Längsachse der langlochförmigen Ausnehmungen 2 und verbindet deren gegenüberliegende Längsseiten (vgl. Figur 1). Die integrale Ausbildung der Querwände 4 ist besonders in Figur 3 zu sehen.

Die sich ergebenden Segmente der langlochförmigen Durchgangsausnehmungen 2 werden jeweils von gegenüberliegenden Längswänden der Ausnehmungen 2, einer der kreisbogenförmig gewölbten Stirnwandungen der langlochförmigen Ausnehmungen 2 und schließlich von einer Seite der Querwand 4 begrenzt. Sie haben insgesamt also eine jeweils halbovalförmige Kontur. Die Querwand 4 teilt die entsprechenden Ausnehmungen 2 jeweils mittig, so dass sich gleich große Ausnehmungssegmente ergeben. Es versteht sich, dass die Ausnehmungen 2 je nach Größe oder Geometrie auch mehrere Querwände 4 aufweisen können.

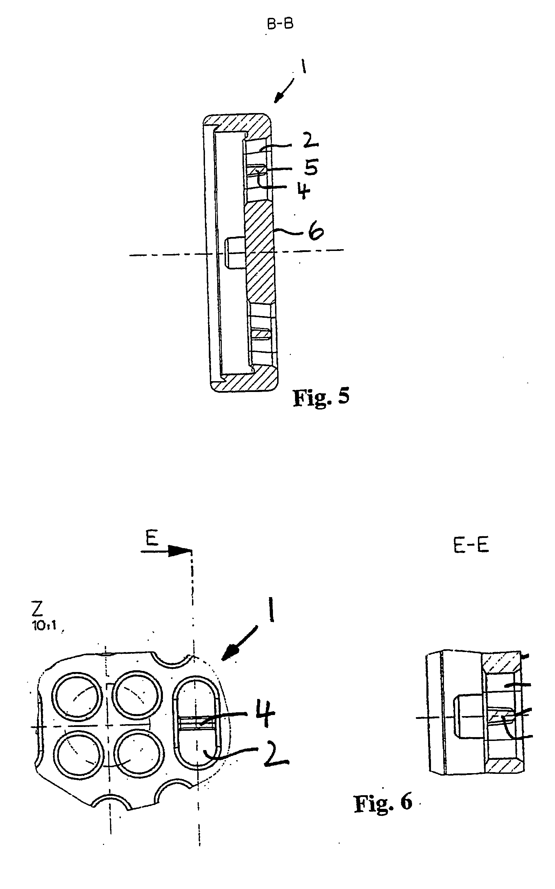

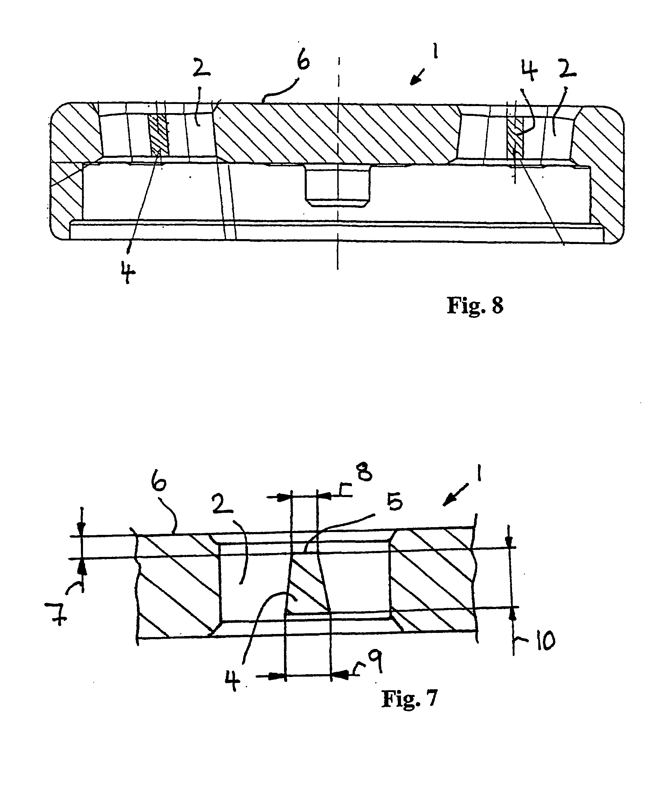

Wie insbesondere die Figuren 5 und 6 zeigen, sind die Querwände 4 in den Ausnehmungen 2 tiefergesetzt, das heißt eine Oberkante 5 der Querwände 4 liegt tiefer als die an die Ausnehmungen 2 angrenzende Oberseite 6 des Borstenträgers 1. Wie Figur 7 zeigt, beträgt die Höhendifferenz 7 zwischen der Querwandoberkante 5 und der Oberseite 6 des Borstenträgers 1 nur den Bruchteil eines Millimeters. Nach einer bevorzugten Ausführung der Erfindung kann die Oberkante 5 etwa 0,1 mm bis 0,5 mm, insbesondere etwa 0,3 mm gegenüber der Borstenträgeroberseite 6 tiefer gesetzt sein.

Auch die Unterkante der Querwand 4 kann gegenüber der Unterseite des Borstenträgers 1 ein wenig in die Ausnehmung 2 hinein versenkt sein. Die Verkürzung der Querwand 4 kann hier ebenfalls den Bruchteil eines Millimeters betragen.

Um ein Aufspreitzen des jeweiligen Borstenbüschels 3 durch die Querwand 4 zu vermeiden, kann die Querwand 4 sich in ihrer Dicke zur Oberseite 6 des Borstenträgers 1 hin verjüngen (vgl. Figur 6 und Figur 7). Die Konizität zur Oberseite hin kann unterschiedlich stark ausgebildet sein. Die Dicke der Querwand 4 im Bereich ihrer Oberkante 5 kann 0,2 bis 0,7 mal der Dicke der Querwand betragen. Gemäß der in Figur 7 gezeigten Ausführung kann die Dicke 8 an der Oberkante 5 etwa 0,25 mm betragen, während die Dicke 9 an der Unterkante der Querwand 4 etwa 0,5 mm betragen kann. Die mittlere Dicke der Querwand 4 liegt also insgesamt im Bereich eines Bruchteils eines Millimeters. Sie beträgt vorzugsweise zwischen 0,25 mm und 0,5 mm. Die Höhe 10 der Querwand 4 wird an die Dicke des Borstenträgers 1 angepasst. Sie ist vorzugsweise ein wenig geringer als die Dicke des Borstenträgers 1. Nach einer bevorzugten Ausführung, wie sie in Figur 7 gezeigt ist, kann die Höhe 10 der Querwand 4 etwa 0,3 mm bis 0,7 mm, vorzugsweise etwa 0,5 mm betragen. Daraus ergibt sich der entsprechende Konizitätswinkel. Neben der Funktion, Spalten in dem jeweiligen Borstenbüschel zu vermeiden, bewirkt die konische Ausbildung der Querwand 4 darüber hinaus eine Erleichterung des Einstopfens der Borsten von der Oberseite 6 des Borstenträgers 1 in die Ausnehmung 2.

Um einen harmonischen Übergang der in den verschiedenen Segmenten angeordneten Borsten zu einem gemeinsamen, dichten Borstenbüschel zu verbessern, kann die Oberkante 5 der Querwand 4 abgerundet ausgebildet sein (vgl. Figur 6). Dies verbessert die Einführung der Borsten und verringert die Beanspruchung der Borsten an der Oberkante der Querwand 4, wenn die Borsten entsprechend gebogen werden. Entsprechende Schrägen können an der Mündung der Ausnehmungen 2 zur Oberseite 6 des Borstenträgers 1 hin vorgesehen sein.

Wie Figur 4 zeigt, ist es zweckmäßig, verschiedene Borstenbüschel in verschiedener Neigung anzuordnen, dass heißt nicht alle Borstenbüschel 3 stehen senkrecht zur Oberseite 6 aus dem Borstenträger 1 vor. Um die Borstenbüschel 3 entsprechend geneigt anzuordnen, sind die Wandungen der jeweiligen Ausnehmungen 2 entsprechend geneigt. Wie Figur 5 zeigt, können die langlochartigen Ausnehmungen 2 schräg gestellte Stirnwandungen besitzen, die zueinander parallel verlaufen und zur Oberseitennormalen des Borstenträgers 1 in einem spitzen Winkel geneigt sind, der Werte bis etwa 30° annehmen kann.

Entsprechend den unterschiedlichen Neigungen der jeweiligen Borstenbüschel 3 können auch die jeweilige Ausnehmung 2 unterteilenden Querwände 4 verschieden geneigt angeordnet sein. Bei gerade vorspringenden Borstenbüschel, wie dies Figur 6 zeigt, kann es vorteilhaft sein, die Querwand 4 ebenfalls senkrecht zur Oberseite 6 des Borstenträgers 1 anzuordnen.

Bei geneigt angeordneten Borstenbüscheln, wie dies bei Figur 5 der Fall ist, können die Querwände 4 ebenfalls geneigt ausgebildet werden. Sie sind gemäß Figur 5 parallel zu den Stirnwandungen der Langlochausnehmungen 2 geneigt. Sie verlaufen in diesem Fall parallel zur Längsachse der Borstenbüschel 3 und können bis zu 30° geneigt sein.

Die Anordnung der Querwände 4 parallel zur Längsachse der Borstenbüschel 3 ist jedoch nicht zwingend. Bei einer geneigten Ausbildung der Ausnehmungswandungen 2 kann dennoch die Querwand 4 senkrecht zur Oberseite 6 des Borstenträgers 1 angeordnet sein, um beispielsweise die Entformung aus einer Spritzgießform zu erleichtern. Eine solche Ausführung der Erfindung zeigt die rechte Seite der Figur 8.

Desweiteren kann vorgesehen sein, die Querwände 4 weder senkrecht zur Oberseite 6 noch parallel zur Neigung der Ausnehmungswandungen anzuordnen. Es kann nach einer weiteren Ausführung der Erfindung, die nicht eigens dargestellt ist, vorgesehen sein, dass die Wandungen der Ausnehmung 2 zu einer Seite hin geneigt und die die entsprechende Ausnehmung unterteilende Querwand zu der anderen Seite hin geneigt angeordnet wird.

Die Querwände 4 wirken in den langlochartigen Ausnehmungen 4 als Stützwände. Sie stützen die Borsten insbesondere bei Biegung in Richtung der Längsachse der Ausnehmungen ab. Die wirksame freie Biegelänge der nur an ihren Enden befestigten Borsten wird verkürzt, und eine Auslenkung der Borsten bereits innerhalb der Ausnehmungen beschränkt. Hierdurch kann eine höhere Steifigkeit der Borstenbüschel bzw. ein härter empfundenes Biegeverhalten der Borstenbüschel erzeugt werden. Dies unterstützt vorteilhaft die Reinigungswirkung. Durch die begrenzte Biegung und Bewegung der Borsten kann eine höhere Standzeit erreicht werden, vorzeitiger Verschleiß wird reduziert.

Zum anderen wird durch den Einsatz der Querwände auch beim sogenannten "anchor free tufting" erreicht, dass der Sitz der Borstenbüschel 3 in den Ausnehmungen weitgehend dem beim Ankerstopfen angenähert wird, so dass entsprechende Eigenschaften erzielt bzw. übertragen werden können. Hierdurch können vergleichbare Fertigungsparameter trotz unterschiedlicher Verankerung der Borsten angewendet und die Ergebnisse klinischer Tests übertragen werden. Hierdurch wird eine beträchtliche Reduzierung der Kosten und des Entwicklungsaufwandes erreicht.

## Patentansprüche

1. Bürstenkopf, insbesondere Zahnbürstenkopf, mit einem Borstenträger und daran befestigten Borsten, die in Form von Borstenbüscheln in Ausnehmungen im Borstenträger sitzen und mit ihren borstenträgerseitigen Enden am Borstenträger ankerfrei befestigt, insbesondere auf einer Rückseite des Borstenträgers verschweißt und/oder verklebt sind, **dadurch gekennzeichnet, dass** zumindest eine Ausnehmung (2) in dem Borstenträger (1) mittels zumindest einer Querwand (4) in mehrere Segmente unterteilt ist und die zumindest eine Querwand derart ausgebildet ist, dass die in den Segmenten sitzenden Borsten ein gemeinsames Borstenbüschel (3) mit glatter und geschlossener Außenkontur entsprechend der Kontur der Ausnehmung bilden.

2. Bürstenkopf nach dem vorhergehenden Anspruch, wobei die Ausnehmung (2) bzw. das darin sitzende Borstenbüschel (3) eine etwa langgestreckte Außenkontur besitzen und zumindest eine Querwand (4) sich etwa quer zu einer Längsachse der Ausnehmung (2) erstreckt oder die Ausnehmung (2) bzw. das darin sitzende Borstenbüschel (3) eine runde, eckige, ovale, kreissegmentförmige Kontur bzw. eine Kombination dieser Konturen besitzen.

3. Bürstenkopf nach einem der vorhergehenden Ansprüche, wobei die zumindest eine Querwand (4) eine Dicke im Bereich von 0,2 mm bis 0,6 mm, vorzugsweise 0,2 mm bis 0,3 mm besitzt.

4. Bürstenkopf nach einem der vorhergehenden Ansprüche, wobei eine Oberkante (5) der zumindest einen Querwand (4) gegenüber einer Oberseite (6) des Borstenträgers (1) tiefer gesetzt ist.

5. Bürstenkopf nach dem vorhergehenden Anspruch, wobei eine Höhendifferenz (7) zwischen der Oberkante (5) der zumindest einen Querwand (4) und der Oberseite (6) des Borstenträgers (1) im Bereich von 0,1 mm bis 0,7 mm, vorzugsweise 0,25 mm bis 0,5 mm beträgt.

6. Bürstenkopf nach einem der vorhergehenden Ansprüche, wobei die zumindest eine Querwand (4) zu ihrer Oberkante hin sich in ihrer Dicke verjüngt, vorzugsweise konisch ausgebildet ist.

7. Bürstenkopf nach einem der vorhergehenden Ansprüche, wobei eine Oberkante (5) der Querwand (4) abgerundet ist.

8. Bürstenkopf nach einem der vorhergehenden Ansprüche, wobei die zumindest eine Querwand (4) integral einstückig mit dem Borstenträger (1) ausgebildet, vorzugsweise zusammen mit dem Borstenträger aus Kunststoff spritzgegossen ist.

9. Bürstenkopf nach einem der vorhergehenden Ansprüche 1 bis 7, wobei die Querwand (4) vom Borstenträger (1) separat ausgebildet und nachträglich in die Ausnehmung (2) eingesetzt ist, vorzugsweise aus Metall besteht und in den die Ausnehmung begrenzenden Wandungen verankert ist.

10. Bürstenkopf nach einem der vorhergehenden Ansprüche, wobei die zumindest eine Ausnehmung (2) in etwa gleich große Segmente unterteilt ist.

11. Bürstenkopf nach einem der vorhergehenden Ansprüche, wobei die Ausnehmungen (2) Durchgangsausnehmungen sind und der Borstenträger (1) im wesentlichen plattenförmig ausgebildet ist.

12. Bürstenkopf nach einem der vorhergehenden Ansprüche, wobei in verschiedenen Segmenten der zumindest einen Ausnehmung (2) verschiedenartig ausgebildete Borsten sitzen.

13. Bürstenkopf nach einem der vorhergehenden Ansprüche, wobei die Segmente eine von einem Kreis verschiedene Kontur, insbesondere eine mehreckige Kontur mit zumindest zwei etwa parallelen Seiten aufweisen.

14. Bürstenkopf nach einem der vorhergehenden Ansprüche, wobei die zumindest eine Querwand (4) zu einer Borstenträgeroberseite (6) senkrecht angeordnet ist.

15. Bürstenkopf nach einem der vorhergehenden Ansprüche, wobei die zumindest eine Querwand (4) zu einer Borstenträgernormalen, die zu einer Borstenträgeroberseite (6) senkrecht steht, in einem spitzen Winkel geneigt ist.

16. Bürstenkopf nachdem vorhergehenden Anspruch, wobei die Querwand (4) zu der Borstenträgernormalen in einem Winkel geneigt ist, der etwa einem Neigungswinkel einer Stirnwandung der Ausnehmung zu der genannten Borstenträgernormalen entspricht.

## Claims

1. A brush head, in particular a toothbrush head, having a bristle carrier and bristles attached thereto, which are seated in the form of tufts in holes in the bristle carrier and fastened by their ends close to the bristle carrier to the bristle carrier without anchoring, in particular by welding and/or adhesive bonding to a rear side of the bristle carrier, **characterized in that** at least one hole (2) in the bristle carrier (1) is divided by means of at least one transverse wall (4) into several segments and said at least one transverse wall is constructed such that the bristles seated in the segments form a common tuft (3) with a smooth and closed outer contour corresponding to the contour of the hole.

2. The brush head according to the preceding claim wherein the hole (2) and the tuft (3) seated therein have an approximately elongated outer contour and at least one transverse wall (4) extends in a direction approximately transverse to a longitudinal axis of the hole (2), or said hole (2) and the tuft (3) seated therein have a round, angular, oval, circular-segmental contour or a combination of such contours.

3. The brush head according to any one of the preceding claims wherein the at least one transverse wall (4) has a thickness in the range from 0.2 mm to 0.6 mm, preferably 0.2 to 0.3 mm.

4. The brush head according to any one of the preceding claims wherein an upper edge (5) of the at least one transverse wall (4) is recessed relative to an upper side (6) of the bristle carrier (1).

5. The brush head according to the preceding claim wherein a difference in height (7) between the upper edge (5) of the at least one transverse wall (4) and the upper side (6) of the bristle carrier (1) lies in the range from 0.1 mm to 0.7 mm, preferably 0.25 mm to 0.5 mm.

6. The brush head according to any one of the preceding claims wherein the at least one transverse wall (4) tapers in thickness toward its upper edge, being preferably of a conical configuration.

7. The brush head according to any one of the preceding claims wherein an upper edge (5) of the transverse wall (4) is rounded off.

8. The brush head according to any one of the preceding claims wherein the at least one transverse wall (4) is integrally constructed in one piece with the bristle carrier (1), being preferably injection-molded of plastic together with the bristle carrier.

9. The brush head according to any one of the preceding claims 1 to 7 wherein the transverse wall (4) is constructed as a part separate from the bristle carrier (1) and subsequently inserted in the hole (2), is preferably made of metal and anchored in the walls bounding the hole.

10. The brush head according to any one of the preceding claims wherein the at least one hole (2) is divided into segments of roughly the same size.

11. The brush head according to any one of the preceding claims wherein the holes (2) are through-holes and the bristle carrier (1) is of an essentially plate-shaped configuration.

12. The brush head according to any one of the preceding claims wherein different bristles are seated in different segments of the at least one hole (2).

13. The brush head according to any one of the preceding claims wherein the segments have a non-circular contour, in particular a polygonal contour with at least two roughly parallel sides.

14. The brush head according to any one of the preceding claims wherein the at least one transverse wall (4) is arranged perpendicular to an upper side (6) of the bristle carrier.

15. The brush head according to any one of the preceding claims wherein the at least one transverse wall (4) is arranged at an acute angle to a bristle carrier normal standing perpendicular to a bristle carrier upper side (6).

16. The brush head according to the preceding claim wherein the transverse wall (4) is inclined relative to the bristle carrier normal at an angle corresponding approximately to an angle of inclination of an end wall of the hole relative to said bristle carrier normal.

## Revendications

1. Tête de brosse, notamment tête de brosse à dents, comportant un support de soies et des soies fixées à celui-ci, qui reposent sous la forme d'aigrettes de soies dans des évidements dans le support de soies et sont fixées sans ancrage au support de soies par leurs extrémités du côté du support de soies, notamment sont soudées et/ou collées sur une face dorsale du support de soies, **caractérisée en ce que** au moins un évidement (2) dans le support de soies (1) est divisé en plusieurs segments au moyen d'au moins une paroi transversale (4) et au moins une paroi transversale est configurée de telle sorte que les soies reposant dans les segments forment une aigrette de soies (3) commune présentant un contour externe lisse et fermé correspondant au contour de l'évidement.

2. Tête de brosse selon la revendication précédente, dans laquelle l'évidement (2), respectivement l'aigrette de soies (3) reposant dans celui-ci possèdent un contour externe quelque peut étiré et au moins une paroi transversale (4) s'étend approximativement en travers d'un axe longitudinal de l'évidement (2) ou l'évidement (2), respectivement l'aigrette de soies (3) reposant dans celui-ci possèdent un contour rond, angulaire, ovale, en forme de segment circulaire, respectivement une combinaison de ces contours.

3. Tête de brosse selon une des revendications précédentes, dans laquelle au moins une paroi transversale (4) possède une épaisseur de l'ordre de 0,2 mm à 0,6 mm, respectivement de 0,2 mm à 0,3 mm.

4. Tête de brosse selon une des revendications précédentes, dans laquelle une arête supérieure (5) d'au moins une des parois transversales (4) est disposée plus bas qu'une face supérieure (6) du support de soies (1).

5. Tête de brosse selon la revendication précédente, dans laquelle une différence de hauteurs (7) entre l'arête supérieure (5) d'au moins une des parois transversales (4) et la face supérieure (6) du support de soies (1) est de l'ordre de 0,1 mm à 0,7 mm, de préférence 0,25 mm à 0,5 mm.

6. Tête de brosse selon une des revendications précédentes, dans laquelle au moins une paroi transversale (4) est configurée sur son arête supérieure de manière à aller en s'amincissant dans le sens de son épaisseur, de préférence de manière conique.

7. Tête de brosse selon une des revendications précédentes, dans laquelle une arête supérieure (5) de la paroi transversale (4) est arrondie.

8. Tête de brosse selon une des revendications précédentes, dans laquelle au moins une paroi transversale (4) est réalisée intégralement en un seul bloc avec le support de soies (1), de préférence est moulée par injection de plastique conjointement avec le support de soies.

9. Tête de brosse selon une des revendications 1 à 7, dans laquelle la paroi transversale (4) est réalisée séparément du support de soies (1) et est de surcroît disposée dans l'évidement (2), est de préférence constituée de métal et est ancrée dans les parois délimitant l'évidement.

10. Tête de brosse selon une des revendications précédentes, dans laquelle au moins un évidement (2) est divisé en segments de taille approximativement similaire.

11. Tête de brosse selon une des revendications précédentes, dans laquelle les évidements (2) sont des évidements traversants et le support de soies (1) est configuré essentiellement en forme de plaque.

12. Tête de brosse selon une des revendications précédentes, dans laquelle des soies configurées différemment reposent dans les différents segments d'au moins un évidement (2).

13. Tête de brosse selon une des revendications précédentes, dans laquelle les segments d'un contour différent d'un cercle, notamment d'un contour à plusieurs angles présentent au moins deux faces approximativement parallèles.

14. Tête de brosse selon une des revendications précédentes, dans laquelle au moins une paroi transversale (4) est disposée perpendiculairement à une face supérieure du support de soies (6).

15. Tête de brosse selon une des revendications précédentes, dans laquelle au moins une paroi transversale (4) est inclinée à un angle aigu par rapport à une normale du support de soies, qui est disposée perpendiculairement à une face supérieure du support de soies (6).

16. Tête de brosse selon la revendication précédente, dans laquelle la paroi transversale (4) est inclinée par rapport aux normales du support de soies d'un angle, qui correspond environ à l'angle d'inclinaison d'une paroi frontale de l'évidement par rapport aux normales du support de soies mentionnées.
